# EUROPÄISCHE PATENTSCHRIFT

(11) **EP 4 178 395 B1**
(45) Veröffentlichungstag und Bekanntmachung des Hinweises auf die Patenterteilung: **20.12.2023**
(21) Anmeldenummer: 21739914.6
(22) Anmeldetag: 05.07.2021
(51) Int. Cl.: A47B 88/473, F16F 9/10, F16F 9/34, F16F 9/348, F16F 9/512

(54) **MÖBELDÄMPFER**
FURNITURE DAMPER
AMORTISSEUR DE MEUBLE

(30) Priorität: 13.07.2020 AT 506062020
(43) Veröffentlichungstag der Anmeldung: 17.05.2023
(73) Patentinhaber: Julius Blum GmbH, 6973 Höchst (AT)
(72) Erfinder: SELTMANN, Heike, 6850 Dornbirn (AT); REISSIG, Matthias, 88131 Lindau (DE)
(74) Vertreter: Torggler & Hofmann Patentanwälte - Innsbruck
(86) Internationale Anmeldenummer: PCT/AT2021/060238
(87) Internationale Veröffentlichungsnummer: WO 2022/011405

(56) Entgegenhaltungen:
- DE-U1-202019 100 230

## Beschreibung

Die vorliegende Erfindung bezieht sich auf einen Möbeldämpfer zur Dämpfung einer Bewegung eines bewegbar gelagerten Möbelteiles, umfassend:
- ein Dämpfergehäuse,
- zumindest eine im Dämpfergehäuse angeordnete Fluidkammer,
- ein in der Fluidkammer angeordnetes Dämpfungsfluid,
- zumindest einen in der Fluidkammer verschiebbar gelagerten Kolben, wobei der Kolben wenigstens einen Kanal zum Durchlass des Dämpfungsfluides aufweist,
- zumindest ein Schaltelement, welches bei einer Ausführung eines Dämpfungshubes und unterhalb eines vorgegebenen Schwellwertes einer Druckbeaufschlagung auf den Kolben in eine erste Stellung bewegbar ist, in welcher der wenigstens eine Kanal des Kolbens durch das Schaltelement zumindest teilweise abgedeckt ist und wobei durch den wenigstens einen Kanal des Kolbens eine erste Durchflussmenge des Dämpfungsfluides strömt.

Im Weiteren betrifft die Erfindung einen Möbelbeschlag mit wenigstens einem Möbeldämpfer zu beschreibenden Art.

Solche Möbeldämpfer werden beispielsweise zur Dämpfung einer Schließbewegung von bewegbaren Möbelteilen (Schubladen, Türen oder Klappen) oder von bewegbar gelagerten Möbelbeschlagteilen eingesetzt, sodass ein lautstarkes Zuschlagen und Beschädigungen der Möbelteile verhindert wird.

Die Dämpfwirkung der Möbeldämpfer wird durch den Strömungswiderstand eines in einem Dämpfergehäuse befindlichen Dämpfungsfluides generiert. Bei einer Druckbeaufschlagung wird der Kolben innerhalb der Fluidkammer verschoben, wobei das Dämpfungsfluid durch Kolbenöffnungen hindurch und/oder durch einen zwischen dem Kolben und der Innenwandung der Fluidkammer gebildeten Spalt von der Hochdruckseite zur Niederdruckseite strömt.

Bei einer zu hohen Druckbeaufschlagung des Kolbens, beispielsweise bei einer missbräuchlichen Verwendung, kann es zu einem so genannten Dämpferprellen kommen. In einem solchen Überlastfall kann das Dämpfungsfluid nicht mehr in einem ausreichenden Maße durch den Kolben hindurch oder am Kolben vorbei strömen. Der erhöhte Druck kann dann nicht mehr durch den Dämpfer abgebaut werden, sodass der Kolben und die daran befestigte Kolbenstange abrupt stehen bleiben oder zurückfedern. Im Extremfall kann das Dämpfergehäuse durch den erhöhten Druck aufplatzen und das hydraulische Dämpfungsfluid aus dem Dämpfergehäuse austreten.

Überlastsicherungen für Möbeldämpfer sind vielfach bekannt, beispielsweise aus der AT 12 633 U1 und der DE 20 2018 103 818 U1 der Anmelderin. Diese Überlastsicherungen weisen üblicherweise eine von einer Feder beaufschlagte Kugel auf, welche in einem Normalbetrieb (d.h. unterhalb einer vorgegebenen Druckbeaufschlagung auf den Kolben) eine Überlastöffnung des Kolbens verschließt und welche die Überlastöffnung des Kolbens in einem Überlastfall (d.h. oberhalb der vorgegebenen Druckbeaufschlagung auf den Kolben) entgegen der Kraft der Feder freigibt, wodurch eine fluidleitende Verbindung zwischen der Hochdruckseite und der Niederdruckseite freigegeben wird. Durch die Freigabe dieser fluidleitenden Verbindung kann eine größere Menge an Dämpfungsfluid von der Hochdruckseite zur Niederdruckseite transportiert werden, sodass der Druck im Möbeldämpfer rasch abgebaut und ein Aufplatzen des Gehäuses des Möbeldämpfers verhindert wird.

Solche Überlastsicherungen mit einer federbelasteten Kugel weisen üblicherweise eine erhöhte Anzahl von Bauteilen auf, wodurch auch die Kosten des Möbeldämpfers in der serienmäßigen Herstellung der Möbeldämpfer erhöht sind.

In der AT 15609 U1, DE 202 21 550 U1 und in der CN 101672339 A sind jeweils Möbeldämpfer mit einem Zylinder und einem im Zylinder verschiebbaren Kolben offenbart. Der Kolben weist zumindest einen Kanal zum Durchtritt des Dämpfungsfluides auf, wobei der Kanal des Kolbens durch zumindest eine verbiegbare oder deformierbare Lamelle verschließbar ist. Der Kanal des Kolbens wird mit zunehmender Druckbeaufschlagung durch die Lamelle immer weiter verschlossen, wodurch eine höhere Bremskraft des Möbeldämpfers generierbar ist.

In der AT 10 342 U1 ist ein Möbeldämpfer mit einem Zylinder und einem im Zylinder verschiebbaren Kolben 2 gezeigt, wobei der Kolben zumindest eine Überlastöffnung zum Durchtritt eines Dämpfungsfluides aufweist. Darüber hinaus ist ein relativ zum Kolben verschiebbares Verschlusselement vorgesehen, durch welches die Überlastöffnung des Kolbens am Beginn des Dämpfungshubes verschließbar ist. Im Normalbetrieb kann also das Dämpfungsfluid ausschließlich durch einen zwischen dem Kolben und einer Innenwand des Zylinders gebildeten Ringspalt strömen. Bei zunehmender Druckbeaufschlagung wird das Verschlusselement radial gedehnt, sodass der besagte Ringspalt verkleinert und so der Strömungswiderstand für den Kolben vergrößert wird. Im Überlastfall wird das Verschlusselement so weit in radialer Richtung gedehnt, bis die Überlastöffnung des Kolbens freigegeben wird und so ein rascher Druckabbau im Zylinder herbeigeführt werden kann. Nachteilig daran ist, dass die Überlastöffnung des Kolbens beim Einsetzen des Dämpfungshubes sofort geschlossen wird und dass das Fluid im Normalbetrieb ausschließlich durch den zwischen dem Kolben und dem Zylinder angeordneten Ringspalt strömt, wodurch die Gefahr eines Dämpferprellens gegeben ist. Die Überlastöffnung des Kolbens wird durch das Verschlusselement hingegen erst im Überlastfall freigegeben. Der Möbeldämpfer neigt also im Betrieb zu einem dualen Schaltverhalten, wobei eine Anpassung an die jeweilig vorherrschenden Druckverhältnisse nicht ausreichend vorhanden ist.

Das Dokument DE 20 2019 100230 U1 offenbart auch einen Möbeldämpfer entsprechend dem Oberbegriff des Anspruchs 1.

Aufgabe der vorliegenden Erfindung ist es daher, einen Möbeldämpfer der eingangs erwähnten Gattung unter Vermeidung der oben diskutierten Nachteile anzugeben.

Dies wird erfindungsgemäß durch die Merkmale des Patentanspruchs 1 gelöst. Weitere vorteilhafte Ausführungen der vorliegenden Erfindung werden in den abhängigen Ansprüchen definiert.

Gemäß der Erfindung ist vorgesehen, dass das zumindest eine Schaltelement bei der Ausführung des Dämpfungshubes und oberhalb des vorgegebenen Schwellwertes der Druckbeaufschlagung auf den Kolben ausgehend von der ersten Stellung in eine zweite Stellung bewegbar ist, in welcher der wenigstens eine Kanal des Kolbens durch das Schaltelement zumindest teilweise freigegeben ist und wobei durch den wenigstens einen Kanal des Kolbens eine zweite Durchflussmenge des Dämpfungsfluides strömt, wobei die zweite Durchflussmenge größer als die erste Durchflussmenge ist.

Mit anderen Worten weist der Möbeldämpfer wenigstens ein Schaltelement auf, welches zumindest zwischen zwei Stellungen bewegbar ist. In einer ersten Stellung des Schaltelementes ist der wenigstens eine Kanal des Kolbens zumindest teilweise abdeckbar, wodurch die Dämpfwirkung des Möbeldämpfers druckabhängig steuerbar ist.

In einer zweiten Stellung dient das Schaltelement hingegen als Überlastsicherung, wobei das Schaltelement in der zweiten Stellung den wenigstens einen Kanal bei einer übermäßigen Druckbeaufschlagung auf den Kolben wieder freigibt, wodurch der im Dämpfergehäuse auftretende Druck des Dämpfungsfluides rasch abgebaut und eine Zerstörung des Dämpfergehäuses verhindert werden kann.

Somit ist es nicht mehr notwendig, eine zusätzliche Überlastsicherung mit einer federbelasteten Kugel vorzusehen, weil das Schaltelement sowohl als druckabhängige Steuerung als auch als Überlastsicherung dient. Auf diese Weise kann die Anzahl der Bauteile des Möbeldämpfers reduziert, der Aufbau des Möbeldämpfers vereinfacht und eine kostengünstige Herstellung ermöglicht werden.

Eine konstruktiv einfache Ausführung ist dann gegeben, wenn das zumindest eine Schaltelement durch eine Verbiegung oder Verformung, vorzugsweise in einem zentralen Bereich, aus der ersten Stellung in die zweite Stellung und/oder aus der zweiten Stellung in die erste Stellung überführbar ist.

Gemäß einem Ausführungsbeispiel kann das zumindest eine Schaltelement eine dritte Stellung aufweisen, in welcher das Schaltelement eine dritte Durchflussmenge freigibt, wobei das zumindest eine Schaltelement bei einer Druckreduktion von der ersten Stellung in die dritte Stellung bewegbar ist, vorzugsweise wobei die dritte Durchflussmenge größer als die erste Durchflussmenge ist.

Mit anderen Worten sind hierbei zumindest drei verschiedene Stellungen des Schaltelementes realisiert. In der ersten Stellung deckt das Schaltelement den Kanal des Kolbens zumindest teilweise ab, wodurch eine erste Dämpfungskraft bereitgestellt wird. In der zweiten Stellung des Schaltelementes liegt der Überlastfall vor, in welchem ein Kanal des Kolbens vom Ventilelement freigegeben wird, wodurch ein rascher Druckabbau im Dämpfergehäuse ermöglicht wird. In der dritten Stellung wird der Kanal des Kolbens nur in einem reduzierten Maße vom Schaltelement abgedeckt, wodurch eine zweite Dämpfungskraft bereitgestellt wird, welche kleiner als die erste Dämpfungskraft ist.

In einem Normalbetrieb des Möbeldämpfers wird sich also das Schaltelement lediglich zwischen der ersten Stellung und der dritten Stellung bewegen, wobei zwei verschiedene Dämpfungskräfte bereitgestellt werden. In der zweiten Stellung liegt hingegen der Überlastfall vor, in welcher das Schaltelement einen Kanal des Kolbens freigibt und das Dämpfungsfluid rascher von der Hochdruckseite zur Niederdruckseite des Möbeldämpfers strömen kann.

Gemäß einem Ausführungsbeispiel kann vorgesehen sein, dass das zumindest eine Schaltelement in der dritten Stellung eine im Wesentlichen flache Neutralstellung einnimmt und in der zweiten Stellung eine Biegestellung einnimmt, in welcher das zumindest eine Schaltelement gegenüber der Neutralstellung zumindest bereichsweise verformt oder verbogen ist.

Vorzugsweise ist vorgesehen, dass das zumindest eine Schaltelement in der ersten Stellung eine weitere Biegestellung einnimmt, in welcher das zumindest eine Schaltelement gegenüber der Neutralstellung zumindest bereichsweise verformt oder verbogen ist und gegenüber der Biegestellung der zweiten Stellung weniger stark verformt oder verbogen ist.

Bei einer bevorzugten Ausführungsform kann vorgesehen sein, dass das zumindest eine Schaltelement
- aus einem Gummimaterial oder einem Kunststoffmaterial gebildet ist, und/oder
- im Wesentlichen rotationsymmetrisch ausgebildet ist, und/oder
- im Wesentlichen zylindrisch ausgebildet ist, und/oder
- im Wesentlichen als Lamelle ausgebildet ist.

Weitere Einzelheiten und Vorteile der vorliegenden Erfindung werden anhand der nachfolgenden Figurenbeschreibung erläutert.
- Fig. 1: zeigt eine perspektivische Darstellung eines Möbels mit einem Möbelkorpus und relativ zum Möbelkorpus bewegbar gelagerten Möbelteilen in Form von Schubladen,
- Fig. 2a, 2b: zeigen einen Möbelbeschlag in Form einer Schubladenausziehführung in einer perspektivischen Ansicht sowie eine vergrößerte Detaildarstellung hierzu,
- Fig. 3a-3e: zeigen den Möbeldämpfer in einer Explosionsansicht sowie in verschiedenen Ansichten mit einer ausgefahrenen und einer eingefahrenen Kolbenstange,
- Fig. 4a-4d: zeigen den Möbeldämpfer mit den verschiedenen Stellungen des Schaltelementes,
- Fig. 5a, 5b: zeigen den Möbeldämpfer in einem perspektivischen Schnitt sowie eine vergrößerte Detaildarstellung hierzu.

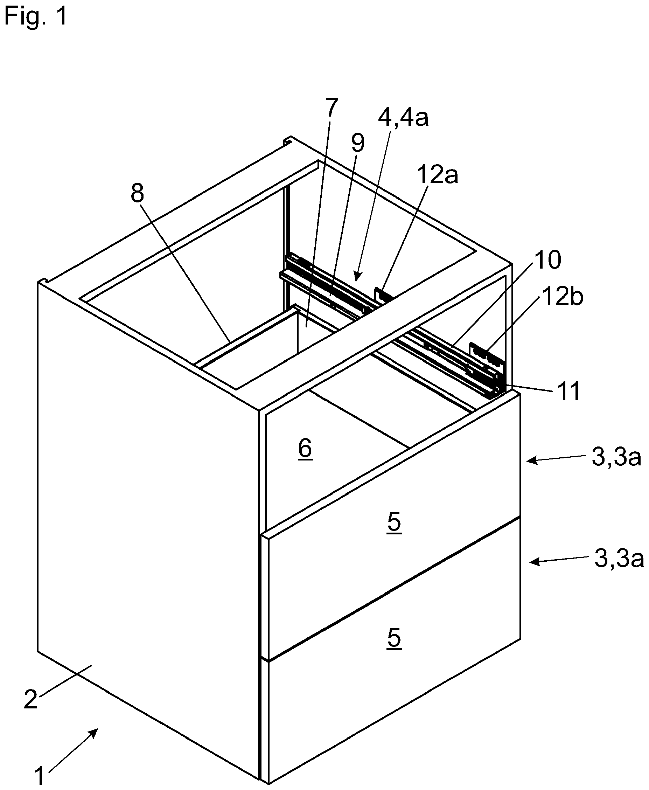

Fig. 1 zeigt ein Möbel 1 mit einem schrankförmigen Möbelkorpus 2, wobei bewegbare Möbelteile 3 in Form von Schubladen 3a über Möbelbeschläge 4 in Form von Schubladenausziehführungen 4a relativ zum Möbelkorpus 2 verfahrbar gelagert sind. Die Schubladen 3a weisen jeweils eine Frontblende 5, einen Schubladenboden 6, Schubladenseitenwände 7 und eine Rückwand 8 auf.

Die Schubladenausziehführungen 4 umfassen jeweils eine Korpusschiene 9, welche über zumindest einen Befestigungsabschnitt 12a, 12b am Möbelkorpus 2 zu befestigen ist, eine relativ zur Korpusschiene 9 verschiebbar gelagerte Ladenschiene 10, welche mit der Schubladenseitenwand 7 verbunden oder zu verbinden ist, sowie optional eine Mittelschiene 11, welche zur Realisierung eines Vollauszuges der Schublade 3a zwischen der Korpusschiene 9 und der Ladenschiene 10 verfahrbar gelagert ist.

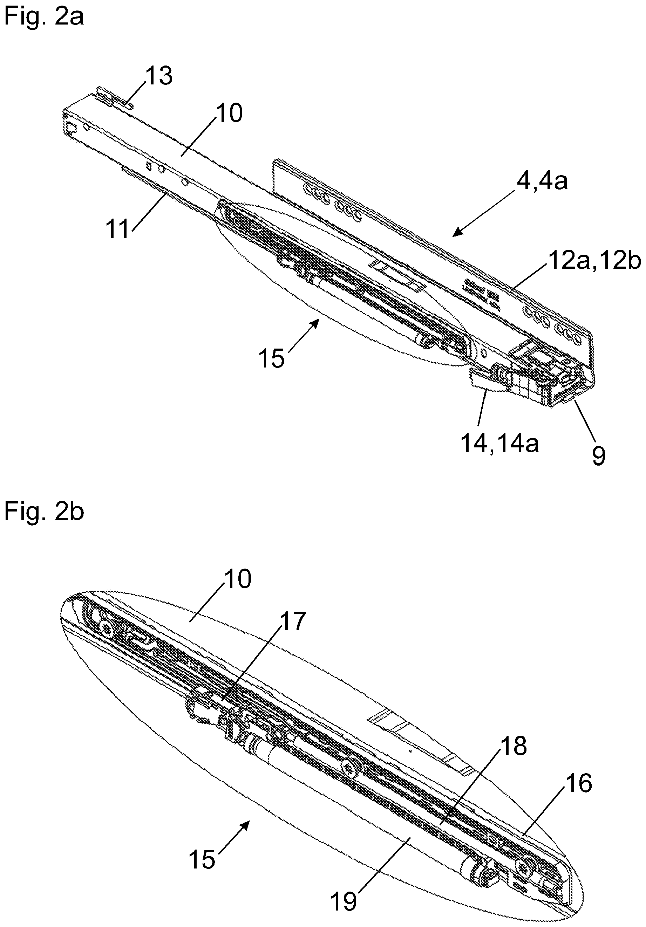

Fig. 2a zeigt den als Schubladenausziehführung 4a ausgebildeten Möbelbeschlag 4 in einer perspektivischen Ansicht. Die Schubladenausziehführung 4a umfasst die über den Befestigungsabschnitt 12a, 12b am Möbelkorpus 2 zu befestigende Korpusschiene 9 und die an der Schublade 3a zu befestigende Ladenschiene 10, wobei die Mittelschiene 11 zwischen der Korpusschiene 9 und der Ladenschiene 10 verfahrbar ist.

Am hinteren Ende der Ladenschiene 10 ist ein, vorzugsweise zapfenförmiges, Befestigungselement 13 angeordnet, welches in einem montierten Zustand der Schublade 3a an der Schubladenausziehführung 4a in eine vorgesehene Öffnung der Schublade 3a eingreift und damit den hinteren Bereich der Schublade 3a quer zu einer Längserstreckung der Ladenschiene 10 stabilisiert. Am vorderen Ende der Ladenschiene 10 ist eine Kupplungsvorrichtung 14 mit einem zur Handbetätigung ausgebildeten Kupplungsteil 14a angeordnet, durch welches der vordere Bereich der Schublade 3a mit der Ladenschiene 10 lösbar koppelbar ist.

Fig. 2b zeigt den ovalen Bereich gemäß Fig. 2a in einer vergrößerten Ansicht. Zum Einziehen der Ladenschiene 10 in eine geschlossene Endlage ist ein von einer Federvorrichtung 18 beaufschlagter Mitnehmer 17 vorgesehen. Der Mitnehmer 17 ist mit einem an der Korpusschiene 9 angeordneten Koppelelement lösbar koppelbar, sodass die Ladenschiene 10 durch eine Kraft der Federvorrichtung 18 in die geschlossene Endlage einziehbar ist.

Zur Dämpfung der federunterstützten Einzugsbewegung der Ladenschiene 10 ist ein Möbeldämpfer 15 mit einem Dämpfergehäuse 19 vorgesehen. Der Möbeldämpfer 15 ist im gezeigten Ausführungsbeispiel über einen Träger 16 an der Ladenschiene 10 befestigt.

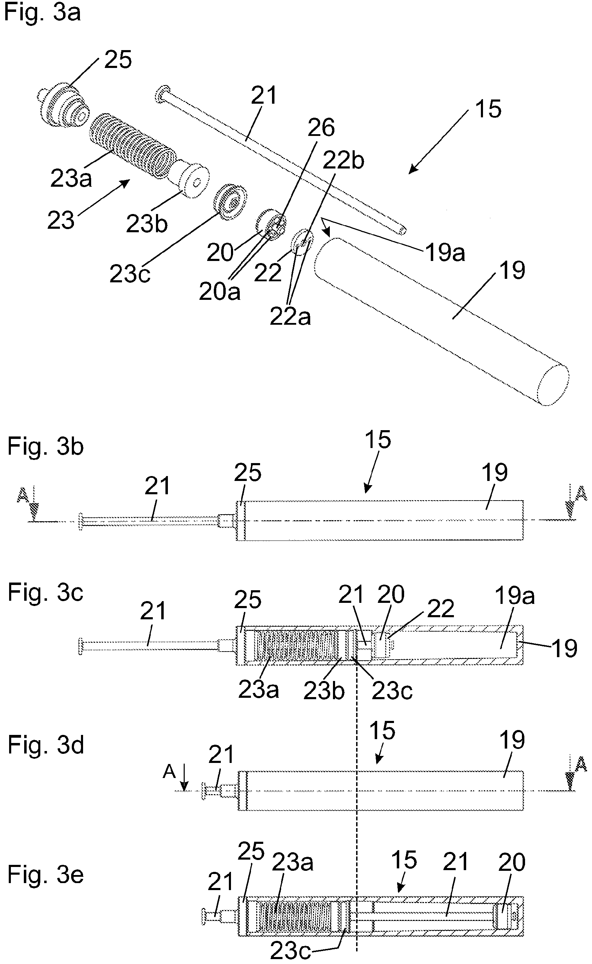

Fig. 3a zeigt den Möbeldämpfer 15 in einer Explosionsansicht. Der Möbeldämpfer 15 umfasst ein, vorzugsweise zylindrisches, Dämpfergehäuse 19, in welchem zumindest eine Fluidkammer 19a angeordnet ist. In der Fluidkammer 19a ist ein Kolben 20 mit einer Kolbenstange 21 linear verschiebbar gelagert.

Der Kolben 20 weist zumindest einen Kanal 20a, vorzugsweise mehrere Kanäle 20a, zum Durchlass eines in der Fluidkammer 19a befindlichen, vorzugsweise hydraulischen, Dämpfungsfluides auf.

Ferner ist zumindest ein Schaltelement 22 vorgesehen, welches bei einer Ausführung eines Dämpfungshubes und unterhalb eines vorgegebenen Schwellwertes einer Druckbeaufschlagung auf den Kolben 20 in eine erste Stellung bewegbar ist, in welcher der wenigstens eine Kanal 20a des Kolbens 20 durch das Schaltelement 22 zumindest teilweise abgedeckt ist und wobei durch den wenigstens einen Kanal 20a des Kolbens 20 eine erste Durchflussmenge des Dämpfungsfluides strömt.

Das Schaltelement 22 kann zumindest ein Loch 22a, vorzugsweise genau zwei Löcher 22a, aufweisen, welches mit dem Kanal 20a des Kolbens 20 in fluidleitender Verbindung steht oder bringbar ist.

Der Kolben 20 weist wenigstens eine Lagerstelle 26 auf, auf welcher das zumindest eine Schaltelement 22, vorzugsweise in einer axialen Richtung des Kolbens 20, bewegbar gelagert ist.

Die Kolbenstange 21 ist in der Fluidkammer 19a eintauchbar, wodurch das Volumen der Fluidkammer 19a veränderbar ist. Durch eine Kompensationsvorrichtung 23, welche zur Veränderung des Volumens der Fluidkammer 19a verformbar oder bewegbar ist, ist das zusätzliche Volumen der Kolbenstange 21 bei einem Eintritt in die Fluidkammer 19a kompensierbar. Die Kompensationsvorrichtung 23 kann ein in der Fluidkammer 19a angeordnetes verformbares Materialstück oder ein in der Fluidkammer 19a verschiebbares Ausgleichselement 23c aufweisen, wobei das Ausgleichselement 23c bei der Ausführung des Dämpfungshubes entgegen einer Kraft eines Kraftspeichers 23a bewegbar ist. Der Kraftspeicher 23a drückt über einen Stützteil 23b gegen das Ausgleichselement 23c.

Durch ein Verschlusselement 25 ist das Dämpfergehäuse 19 abschließbar, wobei die Kolbenstange 21 durch das Verschlusselement 25 hindurchgeführt ist.

Fig. 3b zeigt den Möbeldämpfer 15 in einer Seitenansicht, wobei sich die Kolbenstange 21 relativ zum Dämpfergehäuse 19 in einer ausgefahrenen Stellung befindet. Fig. 3c zeigt einen Schnitt entlang der Ebene A-A gemäß Fig. 3b. Zu erkennen ist der in der Fluidkammer 19a befindliche Kolben 20.

Fig. 3d zeigt den Möbeldämpfer 15 in einer Seitenansicht, wobei sich die Kolbenstange 21 und der Kolben 20 in Bezug zum Dämpfergehäuse 19 in einer eingefahrenen Endstellung befinden.

Fig. 3e zeigt einen Schnitt entlang der Ebene A-A gemäß Fig. 3d. Das zusätzlich in der Fluidkammer 19a aufgenommene Volumen der Kolbenstange 21 ist durch die Kompensationsvorrichtung 23 kompensierbar. Zu erkennen ist, dass das Ausgleichselement 23c der Kompensationsvorrichtung 23 durch den Eintritt der Kolbenstange 21 entgegen einer Kraft des Kraftspeichers 23a im direkten Vergleich mit der Fig. 3c etwas nach links bewegt wurde, wobei sich der Kraftspeicher 23a in Fig. 3e in einem komprimierteren Zustand als in Fig. 3c befindet. Solche Kompensationsvorrichtungen 23 sind aber hinlänglich bekannt und brauchen an dieser Stelle nicht weiter erläutert zu werden.

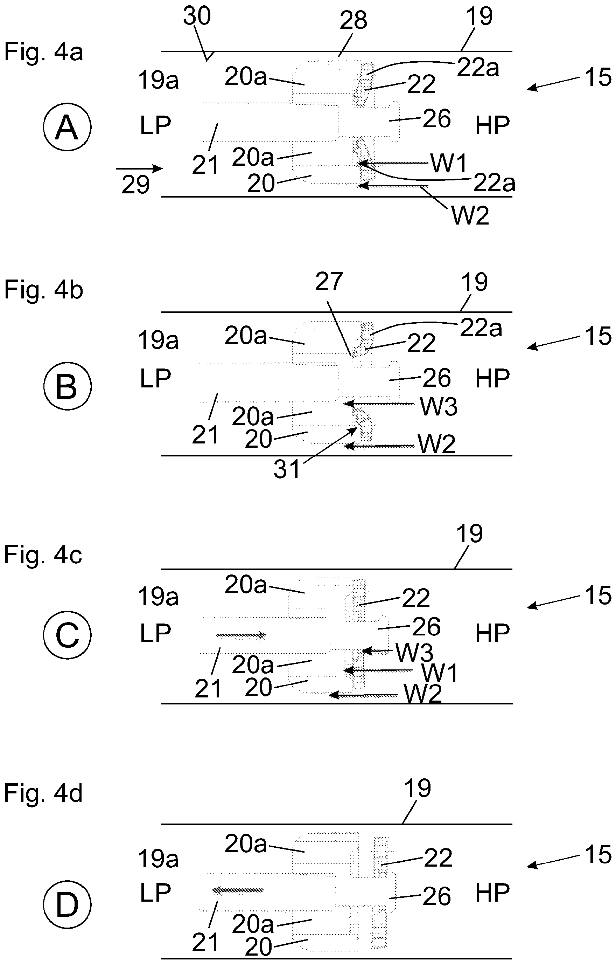

Fig. 4a-4d zeigen den Möbeldämpfer 15 mit den verschiedenen Stellungen (A, B, C, D) des Schaltelementes 22. Erkennbar ist das Dämpfergehäuse 19 mit der darin befindlichen Fluidkammer 19a, welche eine Hochdruckseite (HP) und eine von der Hochdruckseite (HP) durch den Kolben 20 getrennte Niederdruckseite (LP) aufweist. Das Schaltelement 22 ist vorzugsweise auf der Hochdruckseite (HP) angeordnet. Der Kolben 20 weist zumindest einen Kanal 20a, vorzugsweise mehrere Kanäle 20a, zum Durchtritt eines in der Fluidkammer 19a angeordneten Dämpfungsfluides auf. Der Kolben 20 ist mit der aus dem Dämpfergehäuse 19 herausgeführten Kolbenstange 21 verbunden.

In Fig. 4a ist die erste Stellung (A) des Schaltelementes 22 gezeigt, in welcher der Kanal 20a des Kolbens 20 durch das Schaltelement 22 zumindest teilweise abgedeckt ist und wobei durch den Kanal 20a des Kolbens 20 eine erste Durchflussmenge des Dämpfungsfluides strömt. Bei einer Bewegung des Kolbens 20 in Richtung 29 des Dämpfungshubes strömt das Dämpfungsfluid ausgehend von der Hochdruckseite (HP) durch einen zwischen dem Schaltelement 22 und/oder Kolben 20 und einer Innenwand 30 der Fluidkammer 19a gebildeten Spalt 29 zur Niederdruckseite (LP). Überdies strömt das Dämpfungsfluid ausgehend von der Hochdruckseite (HP) durch die Löcher 22a des Schaltelementes 22 und durch die Kanäle 20a des Kolbens 20 zur Niederdruckseite (LP). Dies wird durch die Wege W1, W2 symbolisiert.

In der ersten Stellung (A) nimmt das Schaltelement 22 eine Biegestellung ein, in welcher das Schaltelement 22 gegenüber einer flachen Neutralstellung (Fig. 4c) zumindest bereichsweise verformt oder verbogen ist.

In Fig. 4b ist die zweite Stellung (B) des Schaltelementes 22 und damit der Überlastfall gezeigt. Das Schaltelement 22 ist bei einer übermäßigen, ruckartigen Druckbeaufschlagung des Kolbens 20 in Richtung 29 des Dämpfungshubes durch eine Verbiegung oder Verformung, vorzugsweise in einem zentralen Bereich, aus der ersten Stellung (A) in die zweite Stellung (B) überführbar.

Die Biegung oder Verformung des Schaltelementes 22 wird durch die zentrale Öffnung 22b des Schaltelementes 22 begünstigt, welche in einem Querschnitt eine gestufte Ausbildung im Durchmesser aufweist. Der Durchmesser der Öffnung 22b ist durch eine Verbiegung oder Verformung des Schaltelementes 22 vergrößerbar, um die Durchflussmenge des Dämpfungsfluides oberhalb des vorgegebenen Schwellwertes der Druckbeaufschlagung auf den Kolben 20 zu erhöhen. In der in Fig. 4b gezeigten zweiten Stellung (B) nimmt das Schaltelement 22 eine weitere Biegestellung ein, welche gegenüber der Biegestellung der ersten Stellung (A) stärker verformt oder verbogen ist.

Der Kolben 20 weist wenigstens einen, vorzugsweise nicht-rotationssymmetrischen, Anschlag 27 auf, wobei das Schaltelement 22 in der zweiten Stellung (B) zumindest bereichsweise an den Anschlag 27 anlegbar ist. Der zwischen einem Außenumfang der Lagerstelle 20b und einem Innenumfang der zentralen Öffnung 22b gebildete Ringspalt wird im Bereich des Weges W3 signifikant vergrößert, sodass das Dämpfungsfluid im Überlastfall über die Wege W3, W2 rasch zur Niederdruckseite (LP) transportierbar ist. In der ersten Stellung (A) des Schaltelementes 22 (siehe Fig. 4a) ist hingegen der besagte Ringspalt im Bereich des Weges W3 verschlossen.

Das Schaltelement 22 weist wenigstens ein Loch 22a, vorzugsweise genau zwei Löcher 22a auf. Vorzugsweise ist vorgesehen, dass das wenigstens eine Loch 22a dezentral am Schaltelement 22 angeordnet ist und/oder in der zweiten Stellung (B) (Fig. 4b) zumindest bereichsweise durch eine Anlage an einer Gegenfläche 31 am Kolben 20 verschließbar oder zumindest bereichsweise ist.

Fig. 4c zeigt eine dritte Stellung (C) des Schaltelementes 22, in welcher das Schaltelement 22 eine dritte Durchflussmenge freigibt, wobei das zumindest eine Schaltelement 22 bei einer Druckreduktion von der ersten Stellung (A) in die dritte Stellung (C) bewegbar ist, vorzugsweise wobei die dritte Durchflussmenge größer als die erste Durchflussmenge ist. Die erhöhte dritte Durchflussmenge wird durch die drei Wege W1, W2, W3 symbolisiert.

Das Schaltelement 22 ist durch eine Verbiegung oder Verformung, vorzugsweise in einem zentralen Bereich, aus der dritten Stellung (C) in die erste Stellung (A) und/oder aus der ersten Stellung (A) in die dritte Stellung (C) überführbar. In der dritten Stellung (C) nimmt das Schaltelement 22 eine flache Neutralstellung ein.

Fig. 4d zeigt eine weitere Stellung (D) des Schaltelementes 22, in welcher das Schaltelement 22 bei einer Bewegung des zumindest einen Kolbens 20 in eine Richtung entgegen des Dämpfungshubes den wenigstens einen Kanal 20a des Kolbens 20, vorzugsweise alle im Kolben 20 vorhandenen Kanäle 20a, freigibt. Dies ist der Fall, wenn die Kolbenstange 21 beim Rückstellhub in eine Richtung entgegen der Richtung 29 des Dämpfungshubes wieder aus dem Dämpfergehäuse 19 herausgezogen wird. Durch das Freigeben der Kanäle 20a ist eine rasche Rückstellung der Kolbenstange 21 mit geringem Fluidwiderstand möglich.

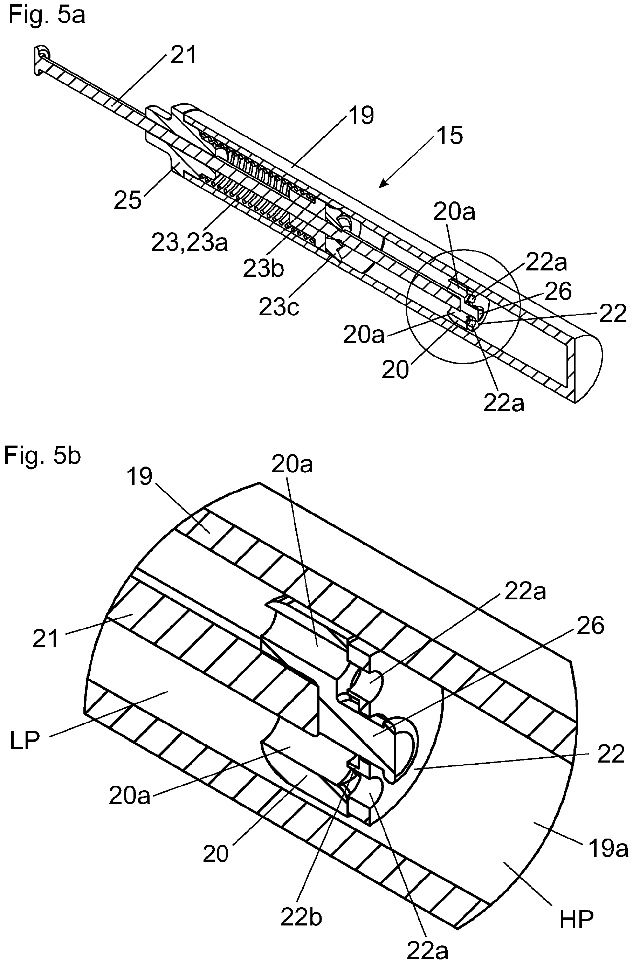

Fig. 5a zeigt den Möbeldämpfer 15 mit den bereits beschriebenen Bauteilen in einem perspektivischen Schnitt.

Fig. 5b zeigt den in Fig. 5a eingekreisten Bereich in einer vergrößerten Ansicht. Zu erkennen ist der in der Fluidkammer 19a verschiebbare Kolben 20, durch welchen die Hochdruckseite (HP) und die Niederdruckseite (LP) voneinander getrennt sind. Das Schaltelement 22 ist an der Lagerstelle 26 des Kolbens 20 in einer axialen Richtung des Kolbens 20 verschiebbar gelagert. Gut zu erkennen sind die gestufte Ausbildung der zentralen Öffnung 22b und die im Kolben 20 verlaufenden Kanäle 20a. Anstelle der gestuften Ausbildung kann die zentrale Öffnung 22b auch eine konische oder eine zylindrische Ausbildung im Durchmesser aufweisen.

Der Möbeldämpfer 15 gemäß der Erfindung wurde in den Zeichnungen in Kombination mit einem Möbelbeschlag 4 in Form einer Schubladenausziehführung 4a dargestellt. Es ist aber unmittelbar einsichtig, dass der Möbeldämpfer 15 auch mit anderen Möbelbeschlägen 4 einsetzbar ist.

Der Möbelbeschlag 4 kann wenigstens zwei relativ zueinander bewegbare Bauteile aufweisen, wobei eine Relativbewegung der wenigstens zwei Bauteile durch den Möbeldämpfer 15 dämpfbar ist und/oder dass der Möbelbeschlag 4 als Möbelantrieb zum Bewegen eines bewegbar gelagerten Möbelteiles 3, als Möbelscharnier zum Bewegen eines bewegbar gelagerten Möbelteiles 3 oder als Dämpfvorrichtung zum Dämpfen einer Bewegung eines bewegbaren Möbelteiles 3 ausgebildet ist.

## Patentansprüche

1. Möbeldämpfer (15) zur Dämpfung einer Bewegung eines bewegbar gelagerten Möbelteiles (3), umfassend:
- ein Dämpfergehäuse (19),
- zumindest eine im Dämpfergehäuse (19) angeordnete Fluidkammer (19a),
- ein in der Fluidkammer (19a) angeordnetes Dämpfungsfluid,
- zumindest einen in der Fluidkammer (19a) verschiebbar gelagerten Kolben (20),
wobei der Kolben (20) wenigstens einen Kanal (20a) zum Durchlass des Dämpfungsfluides aufweist, **dadurch gekennzeichnet, dass** der Möbeldämpfer zumindest ein Schaltelement (22) aufweist, welches bei einer Ausführung eines Dämpfungshubes und unterhalb eines vorgegebenen Schwellwertes einer Druckbeaufschlagung auf den Kolben (20) in eine erste Stellung (A) bewegbar ist, in welcher der wenigstens eine Kanal (20a) des Kolbens (20) durch das Schaltelement (22) zumindest teilweise abgedeckt ist und wobei durch den wenigstens einen Kanal (20a) des Kolbens (20) eine erste Durchflussmenge des Dämpfungsfluides strömt,
wobei das zumindest eine Schaltelement (22) bei der Ausführung des Dämpfungshubes und oberhalb des vorgegebenen Schwellwertes der Druckbeaufschlagung auf den Kolben (20) ausgehend von der ersten Stellung (A) in eine zweite Stellung (B) bewegbar ist, in welcher der wenigstens eine Kanal (20a) des Kolbens (20) durch das Schaltelement (22) zumindest teilweise freigegeben ist und wobei durch den wenigstens einen Kanal (20a) des Kolbens (20) eine zweite Durchflussmenge des Dämpfungsfluides strömt, wobei die zweite Durchflussmenge größer als die erste Durchflussmenge ist.

2. Möbeldämpfer (15) nach Anspruch 1, **dadurch gekennzeichnet, dass** das zumindest eine Schaltelement (22) durch eine Verbiegung oder Verformung, vorzugsweise in einem zentralen Bereich, aus der ersten Stellung (A) in die zweite Stellung (B) und/oder aus der zweiten Stellung (B) in die erste Stellung (A) überführbar ist.

3. Möbeldämpfer (15) nach Anspruch 1 oder 2, **dadurch gekennzeichnet, dass** das zumindest eine Schaltelement eine dritte Stellung (C) aufweist, in welcher das Schaltelement (22) eine dritte Durchflussmenge freigibt, wobei das zumindest eine Schaltelement (22) bei einer Druckreduktion von der ersten Stellung (A) in die dritte Stellung (C) bewegbar ist, vorzugsweise wobei die dritte Durchflussmenge größer als die erste Durchflussmenge ist.

4. Möbeldämpfer (15) nach Anspruch 3, **dadurch gekennzeichnet, dass** das zumindest eine Schaltelement (22) durch eine Verbiegung oder Verformung, vorzugsweise in einem zentralen Bereich, aus der dritten Stellung (C) in die erste Stellung (A) und/oder aus der ersten Stellung (A) in die dritte Stellung (C) überführbar ist.

5. Möbeldämpfer (15) nach Anspruch 2 und 4, **dadurch gekennzeichnet, dass** das zumindest eine Schaltelement (22) in der dritten Stellung (C) eine im Wesentlichen flache Neutralstellung einnimmt und in der zweiten Stellung (B) eine Biegestellung einnimmt, in welcher das zumindest eine Schaltelement (22) gegenüber der Neutralstellung zumindest bereichsweise verformt oder verbogen ist, vorzugsweise wobei das zumindest eine Schaltelement (22) in der ersten Stellung eine weitere Biegestellung einnimmt, in welcher das zumindest eine Schaltelement (22) gegenüber der Neutralstellung zumindest bereichsweise verformt oder verbogen ist und gegenüber der Biegestellung der zweiten Stellung weniger stark verformt oder verbogen ist.

6. Möbeldämpfer (15) nach einem der Ansprüche 3 bis 5, **dadurch gekennzeichnet, dass** der Kolben (20) wenigstens eine Lagerstelle (26) aufweist, auf welcher das zumindest eine Schaltelement (22) bewegbar gelagert ist, wobei das Schaltelement (22) eine zentrale Öffnung (22b) aufweist und in der dritten Stellung (C) einen Ringspalt zwischen einem Außenumfang der wenigstens einen Lagerstelle (26) und einem Innenumfang der zentralen Öffnung (22b) freigibt, vorzugsweise wobei der Ringspalt in der ersten Stellung (A) verschließbar ist und/oder in der zweiten Stellung (B) zumindest bereichsweise vergrößerbar ist.

7. Möbeldämpfer (15) nach einem der Ansprüche 1 bis 6, **dadurch gekennzeichnet, dass** der Kolben (20) wenigstens einen Anschlag (27) aufweist und das zumindest eine Schaltelement (22) in der zweiten Stellung (B) zumindest bereichsweise an den wenigstens einen Anschlag (27) anlegbar ist.

8. Möbeldämpfer (15) nach einem der Ansprüche 1 bis 7, **dadurch gekennzeichnet, dass** wenigstens eine Schaltelement (20) wenigstens ein Loch (22a), vorzugsweise genau zwei Löcher (22a), aufweist, wobei das wenigstens eine Loch (22a) mit dem Kanal (20a) des zumindest einen Kolbens (20) in fluidleitender Verbindung steht oder bringbar ist, vorzugsweise wobei
- das wenigstens eine Loch (22a) dezentral am Schaltelement (22) angeordnet ist, und/oder
- in der zweiten Stellung (B) zumindest bereichsweise durch eine Anlage an einer Gegenfläche (31) am Kolben (20) verschließbar oder zumindest bereichsweise abdeckbar ist.

9. Möbeldämpfer (15) nach einem der Ansprüche 1 bis 8, **dadurch gekennzeichnet, dass** das zumindest eine Schaltelement (22) eine, vorzugsweise zentrale, Öffnung (22b) aufweist, vorzugsweise wobei
- die Öffnung (22b) in einem Querschnitt eine gestufte, konische oder eine zylindrische Ausbildung im Durchmesser aufweist, und/oder
- ein Durchmesser der Öffnung (22b) durch eine Verbiegung oder Verformung des Schaltelementes (22) vergrößerbar ist, um die Durchflussmenge des Dämpfungsfluides oberhalb des vorgegebenen Schwellwertes der Druckbeaufschlagung auf den Kolben (20) zu erhöhen.

10. Möbeldämpfer (15) nach einem der Ansprüche 1 bis 9, **dadurch gekennzeichnet, dass** das zumindest eine Schaltelement (22)
- aus einem Gummimaterial oder einem Kunststoffmaterial gebildet ist, und/oder
- im Wesentlichen rotationsymmetrisch ausgebildet ist, und/oder
- im Wesentlichen zylindrisch ausgebildet ist, und/oder
- im Wesentlichen als Lamelle ausgebildet ist.

11. Möbeldämpfer (15) nach einem der Ansprüche 1 bis 10, **dadurch gekennzeichnet, dass** der zumindest eine Kolben (20) eine axiale Richtung aufweist, wobei das zumindest eine Schaltelement (22), vorzugsweise entlang einer mit dem Kolben (20) verbundenen Lagerstelle (26), in der axialen Richtung relativ zum Kolben (20) verschiebbar ist.

12. Möbeldämpfer (15) nach einem der Ansprüche 1 bis 11, **dadurch gekennzeichnet, dass** die zumindest eine Fluidkammer (19a) eine Hochdruckseite (HP) und eine Niederdruckseite (LP) aufweist, welche durch den zumindest einen Kolben (20) voneinander getrennt sind, wobei vorzugsweise vorgesehen ist, dass das zumindest eine Schaltelement (22) auf der Hochdruckseite (HP) der Fluidkammer (19a) angeordnet ist.

13. Möbeldämpfer (15) nach einem der Ansprüche 1 bis 12, **dadurch gekennzeichnet, dass** das zumindest eine Schaltelement (22) eine weitere Stellung aufweist, in welcher das Schaltelement (22) bei einer Bewegung des zumindest einen Kolbens (20) in eine Richtung entgegen des Dämpfungshubes den wenigstens einen Kanal (20a) des Kolbens (20), vorzugsweise alle im Kolben (20) vorhandenen Kanäle (20a), freigibt.

14. Möbeldämpfer (15) nach einem der Ansprüche 1 bis 13, **dadurch gekennzeichnet, dass** eine mit dem zumindest einen Kolben (20) verbundene Kolbenstange (21) vorgesehen ist, wobei vorzugsweise vorgesehen ist, dass die Kolbenstange (21) aus dem Dämpfergehäuse (19) des Möbeldämpfers (15) herausgeführt ist.

15. Möbeldämpfer (15) nach einem der Ansprüche 1 bis 14, **dadurch gekennzeichnet, dass** eine Kolbenstange (21) in der Fluidkammer (19a) eintauchbar ist, wodurch das Volumen der Fluidkammer (19a) veränderbar ist, wobei eine Kompensationsvorrichtung (23) vorgesehen ist, welche zur Veränderung des Volumens der Fluidkammer (19a) verformbar oder bewegbar ist, wobei vorzugsweise vorgesehen ist, dass die Kompensationsvorrichtung (23) ein in der Fluidkammer (19a) angeordnetes verformbares Materialstück oder ein in der Fluidkammer (19a) verschiebbares Ausgleichselement (23c) aufweist, wobei das Ausgleichselement (23c) bei der Ausführung des Dämpfungshubes entgegen einer Kraft eines Kraftspeichers (23a) bewegbar ist.

16. Möbelbeschlag (4) mit wenigstens einem Möbeldämpfer (15) nach einem der Ansprüche 1 bis 15, vorzugsweise wobei der Möbelbeschlag (4) wenigstens zwei relativ zueinander bewegbare Bauteile aufweist und wobei eine Relativbewegung der wenigstens zwei Bauteile durch den Möbeldämpfer (15) dämpfbar ist, und/oder dass der Möbelbeschlag (4) als Möbelantrieb zum Bewegen eines bewegbar gelagerten Möbelteiles (3), als Möbelscharnier zum Bewegen eines bewegbar gelagerten Möbelteiles (3), als Dämpfvorrichtung zum Dämpfen einer Bewegung eines bewegbaren Möbelteiles (3) oder als Schubladenausziehführung (4a) zum Bewegen eines bewegbaren Möbelteiles (3) in Form einer Schublade (3a) ausgebildet ist.

## Claims

1. A furniture damper (15) for dampening a movement of a movably-supported furniture part (3), comprising:
- a damper housing (19),
- at least one fluid chamber (19a) arranged in the damper housing (19),
- a damping fluid arranged in the fluid chamber (19a),
- at least one piston (20) displaceably supported within the fluid chamber (19a), the piston (20) having at least one channel (20a) for the passage of the damping fluid,
**characterized in that** the furniture damper (15) includes at least one switch element (22) configured to be moved, when a damping stroke is performed and below a predetermined threshold value of a pressure application to the piston (20), into a first position (A) in which the at least one channel (20a) of the piston (20) is at least partially covered by the switch element (22) and wherein a first flow rate of the damping fluid streams through the at least one channel (20a) of the piston (20),
wherein the at least one switch element (22), when the damping stroke is performed and above the predetermined threshold value of the pressure application to the piston (20), is configured to be moved from the first position (A) into a second position (B) in which the at least one channel (20a) of the piston (20) is at least partially unblocked by the switch element (22) and wherein a second flow rate of the damping fluid streams through the at least one channel (20a) of the piston (20), the second fluid rate of the damping fluid being larger than the first fluid rate.

2. The furniture damper (15) according to claim 1, **characterized in that** the at least one switch element (22) is configured to be moved from the first position (A) into the second position (B) and/or from the second position (B) into the first position (A) by flexing or by deformation, preferably in a central region.

3. The furniture damper (15) according to claim 1 or 2, **characterized in that** the at least one switch element (22) has a third position (C) in which the switch element (22) unblocks a third flow rate, and wherein the at least one switch element (22), upon a pressure reduction, is configured to be moved from the first position (A) into the third position (C), preferably wherein the third flow rate is larger than the first flow rate.

4. The furniture damper (15) according to claim 3, **characterized in that** the at least one switch element (22) is configured to be transferred from the third position (C) into the first position (A) and/or from the first position (A) into the third position (C) by flexing or by deformation, preferably in a central region.

5. The furniture damper (15) according to claim 2 and 4, **characterized in that** the at least one switch element (22), in the third position (C), adopts a substantially flat neutral position and, in the second position (B), adopts a flexing position in which the at least one switch element (22) is at least partially deformed or flexed relative to the neutral position, preferably wherein the at least one switch element (22), in the first position (A), adopts a further flexing position in which the at least one switch element (22) is at least partially deformed or flexed relative to the neutral position, and is deformed or flexed to a lesser extent in relation to the flexing position of the second position (B).

6. The furniture damper (15) according to one of the claims 3 to 5, **characterized in that** the piston (20) includes at least one bearing location (26) for movably supporting the at least one switch element (22), wherein the switch element (22) has a central opening (22b) and unblocks, in the third position (C), an annular gap formed between an outer perimeter of the at least one bearing location (26) and an inner perimeter of the central opening (22b), preferably wherein the annular gap can be closed in the first position (A) and/or can be at least partially enlarged in the second position (B).

7. The furniture damper (15) according to one of the claims 1 to 6, **characterized in that** the piston (20) includes at least one abutment (27), and the at least one switch element (22), in the second position (B), is configured to at least partially bear against the at least one abutment (27).

8. The furniture damper (15) according to one of the claims 1 to 7, **characterized in that** the at least one switch element (20) includes at least one hole (22a), preferably precisely two holes (22a), wherein the at least one hole (22a) is in a fluid-conductive connection or is configured to be brought into a fluid-conductive connection with the at least one channel (20a) of the at least one piston (20), preferably wherein
- the at least one hole (22a) is peripherally arranged on the switch element (22), and/or
- the at least one hole (22a), in the second position (B), can be closed or can be at least partially covered by bearing against a counter-surface (31) on the piston (20) .

9. The furniture damper (15) according to one of the claims 1 to 8, **characterized in that** the at least one switch element (22) includes a, preferably central, opening (22b), preferably wherein
- the opening (22b), in a cross-section, has a stepped, conical or a cylindrical configuration in diameter, and/or
- a diameter of the opening (22b) can be enlarged by flexing or by a deformation of the switch element (22) so as to increase the flow rate of the damping fluid above the predetermined threshold value of the pressure application to the piston (20).

10. The furniture damper (15) according to one of the claims 1 to 9, **characterized in that** the at least one switch element (22)
- is formed of a rubber material or a plastic material, and/or
- is configured substantially rotationally symmetrical, and/or
- is configured substantially cylindrical, and/or
- is configured substantially as a lamella.

11. The furniture damper (15) according to one of the claims 1 to 10, **characterized in that** the at least one piston (20) has an axial direction, wherein the at least one switch element (22) is displaceable in the axial direction relative to the piston (20), preferably along a bearing location (26) connected to the piston (20).

12. The furniture damper (15) according to one of the claims 1 to 11, **characterized in that** the at least one fluid chamber (19a) includes a high-pressure side (HP) and a low-pressure side (LP) which are separated from one another by the at least one piston (20), wherein it is preferably provided that the at least one switch element (22) is arranged on the high-pressure side (HP) of the fluid chamber (19a).

13. The furniture damper (15) according to one of the claims 1 to 12, **characterized in that** the at least one switch element (22) includes a further position (D) in which the switch element (22), upon a movement of the at least one piston (20) in a direction opposite the damping stroke, unblocks the at least one channel (20a) of the piston (20), preferably all channels (20a) provided in the piston (20).

14. The furniture damper (15) according to one of the claims 1 to 13, **characterized in that** a piston rod (21) connected to the at least one piston (20) is provided, wherein it is preferably provided that the piston rod (21) is led out from the damper housing (19) of the furniture damper (15).

15. The furniture damper (15) according to one of the claims 1 to 14, **characterized in that** a piston rod (21) can be immersed into the fluid chamber (19a) so as to vary a volume of the fluid chamber (19a), wherein a compensation device (23) is provided, the compensation device (23) being configured to be deformed or moved so as to vary the volume of the fluid chamber (19a), wherein it is preferably provided that the compensation device (23) includes a deformable material portion arranged in the fluid chamber (19a) or a compensating element (23c) displaceable within the fluid chamber (19a), wherein the compensating element (23c) is movable against a force of a force storage member (23a) when a damping stroke is performed.

16. A furniture fitting (4) comprising at least one furniture damper (15) according to one of the claims 1 to 15, preferably wherein the furniture fitting (4) includes at least two components configured to be moved relative to one another and wherein a relative movement of the at least two components can be dampened by the furniture damper (15), and/or the furniture fitting (4) is configured as a furniture drive for moving a movably-supported furniture part (3), as a furniture hinge for moving a movably-supported furniture part (3), as a damping device for dampening a movement of a movable furniture part (3), or as a drawer pull-out guide (4a) for moving a movable furniture part (3) in the form of a drawer (3a) .

## Revendications

1. Amortisseur de meuble (15) pour l'amortissement d'un mouvement d'une partie de meuble (3) montée mobile, comprenant :
- un boîtier d'amortisseur (19),
- au moins une chambre de fluide (19a) disposée dans le boîtier d'amortisseur (19),
- un fluide d'amortissement disposé dans la chambre de fluide (19a),
- au moins un piston (20) monté coulissant dans la chambre de fluide (19a), dans lequel le piston (20) présente au moins un canal (20a) pour le passage du fluide d'amortissement,
**caractérisé en ce que** l'amortisseur de meuble présente au moins un élément de commutation (22), lequel lors d'une exécution d'une course d'amortissement et au-dessous d'une valeur de seuil prédéfinie d'une pression d'application sur le piston (20) est mobile dans une première position (A), dans laquelle le au moins un canal (20a) du piston (20) est recouvert au moins en partie par l'élément de commutation (22) et dans lequel un premier débit du fluide d'amortissement circule à travers le au moins un canal (20a) du piston (20),
dans lequel, lors de l'exécution de la course d'amortissement et au-dessus de la valeur de seuil prédéfinie de la pression d'application sur le piston (20), le au moins un élément de commutation (22) est mobile à partir de la première position (A) dans une deuxième position (B), dans laquelle le au moins un canal (20a) du piston (20) est libéré au moins en partie par l'élément de commutation (22) et dans lequel un deuxième débit du fluide d'amortissement circule à travers le au moins un canal (20a) du piston (20), dans lequel le deuxième débit est supérieur au premier débit.

2. Amortisseur de meuble (15) selon la revendication 1, **caractérisé en ce que** le au moins un élément de commutation (22) peut être amené par une flexion ou déformation, de préférence dans une zone centrale, à partir de la première position (A) dans la deuxième position (B) et/ou à partir de la deuxième position (B) dans la première position (A).

3. Amortisseur de meuble (15) selon la revendication 1 ou 2, **caractérisé en ce que** le au moins un élément de commutation présente une troisième position (C), dans laquelle l'élément de commutation (22) libère un troisième débit, dans lequel le au moins un élément de commutation (22) lors d'une réduction de pression est mobile à partir de la première position (A) dans la troisième position (C), de préférence dans lequel le troisième débit est supérieur au premier débit.

4. Amortisseur de meuble (15) selon la revendication 3, **caractérisé en ce que** le au moins un élément de commutation (22) peut être amené par une flexion ou déformation, de préférence dans une zone centrale, à partir de la troisième position (C) dans la première position (A) et/ou à partir de la première position (A) dans la troisième position (C).

5. Amortisseur de meuble (15) selon la revendication 2 et 4, **caractérisé en ce que** le au moins un élément de commutation (22) dans la troisième position (C) occupe une position neutre sensiblement plate et dans la deuxième position (B) occupe une position de flexion, dans laquelle le au moins un élément de commutation (22) est déformé ou fléchi au moins par endroits par rapport à la position neutre, de préférence dans lequel le au moins un élément de commutation (22) occupe dans la première position une autre position de flexion, dans laquelle le au moins un élément de commutation (22) est déformé ou fléchi au moins par endroits par rapport à la position neutre et est moins fortement déformé ou fléchi par rapport à la position de flexion de la deuxième position (B).

6. Amortisseur de meuble (15) selon l'une quelconque des revendications 3 à 5, **caractérisé en ce que** le piston (20) présente au moins un point d'appui (26), sur lequel le au moins un élément de commutation (22) est monté mobile, dans lequel l'élément de commutation (22) présente une ouverture centrale (22b) et dans la troisième position (C) libère une fente annulaire entre une périphérie extérieure du au moins un point d'appui (26) et une périphérie intérieure de l'ouverture centrale (22b), de préférence dans lequel la fente annulaire dans la première position (A) peut être fermée et/ou dans la deuxième position (B) peut être augmentée au moins par endroits.

7. Amortisseur de meuble (15) selon l'une quelconque des revendications 1 à 6, **caractérisé en ce que** le piston (20) présente au moins une butée (27) et le au moins un élément de commutation (22) dans la deuxième position (B) peut être placé au moins par endroits sur la au moins une butée (27).

8. Amortisseur de meuble (15) selon l'une quelconque des revendications 1 à 7, **caractérisé en ce qu'**au moins un élément de commutation (20) présente au moins un trou (22a), de préférence exactement deux trous (22a), dans lequel le au moins un trou (22a) est ou peut être amené en liaison fluidique avec le canal (20a) du au moins un piston (20), de préférence dans lequel
- le au moins un trou (22a) est disposé de manière décentralisée sur l'élément de commutation (22), et/ou
- dans la deuxième position (B) peut être fermé au moins par endroits ou peut être recouvert au moins par endroits par un appui sur une surface complémentaire (31) sur le piston (20).

9. Amortisseur de meuble (15) selon l'une quelconque des revendications 1 à 8, **caractérisé en ce que** le au moins un élément de commutation (22) présente une ouverture (22b), de préférence centrale, de préférence dans lequel
- l'ouverture (22b) présente dans une section transversale une réalisation étagée, conique ou une réalisation cylindrique dans le diamètre, et/ou
- un diamètre de l'ouverture (22b) peut être augmenté par une flexion ou déformation de l'élément de commutation (22), afin d'augmenter le débit du fluide d'amortissement au-dessus de la valeur de seuil prédéfinie de la pression d'application sur le piston (20).

10. Amortisseur de meuble (15) selon l'une quelconque des revendications 1 à 9, **caractérisé en ce que** le au moins un élément de commutation (22)
- est formé d'un matériau caoutchouteux ou d'une matière plastique, et/ou
- est réalisé de manière sensiblement symétrique en rotation, et/ou
- est réalisé de manière sensiblement cylindrique, et/ou
- est réalisé sensiblement en tant que lamelle.

11. Amortisseur de meuble (15) selon l'une quelconque des revendications 1 à 10, **caractérisé en ce que** le au moins un piston (20) présente une direction axiale, dans lequel le au moins un élément de commutation (22) peut coulisser dans la direction axiale par rapport au piston (20), de préférence le long d'un point d'appui (26) relié au piston (20).

12. Amortisseur de meuble (15) selon l'une quelconque des revendications 1 à 11, **caractérisé en ce que** la au moins une chambre de fluide (19a) présente un côté haute pression (HP) et un côté basse pression (LP), lesquels sont séparés l'un de l'autre par le au moins un piston (20), dans lequel il est prévu de préférence que le au moins un élément de commutation (22) soit disposé sur le côté haute pression (HP) de la chambre de fluide (19a).

13. Amortisseur de meuble (15) selon l'une quelconque des revendications 1 à 12, **caractérisé en ce que** le au moins un élément de commutation (22) présente une autre position, dans laquelle l'élément de commutation (22) lors d'un mouvement du au moins un piston (20) dans une direction à l'encontre de la course d'amortissement libère le au moins un canal (20a) du piston (20), de préférence tous les canaux (20a) présents dans le piston (20).

14. Amortisseur de meuble (15) selon l'une quelconque des revendications 1 à 13, **caractérisé en ce qu'**une tige de piston (21) reliée à l'au moins un piston (20) est prévue, dans lequel il est prévu de préférence que la tige de piston (21) soit guidée à l'extérieur du boîtier d'amortisseur (19) de l'amortisseur de meuble (15).

15. Amortisseur de meuble (15) selon l'une quelconque des revendications 1 à 14, **caractérisé en ce qu'**une tige de piston (21) peut être enfoncée dans la chambre de fluide (19a), ce qui a pour effet que le volume de la chambre de fluide (19a) peut être modifié, dans lequel un dispositif de compensation (23) est prévu, lequel est déformable ou mobile pour la modification du volume de la chambre de fluide (19a), dans lequel il est prévu de préférence que le dispositif de compensation (23) présente une pièce de matériau déformable disposée dans la chambre de fluide (19a) ou un élément de compensation (23c) pouvant coulisser dans la chambre de fluide (19a), dans lequel l'élément de compensation (23c) est mobile lors de l'exécution de la course d'amortissement à l'encontre d'une force d'un accumulateur de force (23a).

16. Ferrure de meuble (4) avec au moins un amortisseur de meuble (15) selon l'une quelconque des revendications 1 à 15, de préférence dans lequel la ferrure de meuble (4) présente au moins deux éléments mobiles l'un par rapport à l'autre et dans lequel un mouvement relatif des au moins deux éléments peut être amorti par l'amortisseur de meuble (15), et/ou que la ferrure de meuble (4) est réalisée en tant qu'entraînement de meuble pour déplacer une partie de meuble (3) montée mobile, en tant que charnière de meuble pour déplacer une partie de meuble (3) montée mobile, en tant que dispositif d'amortissement pour amortir un mouvement d'une partie de meuble (3) mobile ou en tant que glissière de sortie de tiroir (4a) pour déplacer une partie de meuble (3) mobile sous forme d'un tiroir (3a).
